## Europäisches Patentamt
## European Patent Office
## Office européen des brevets

(19)

(11) Veröffentlichungsnummer: **0 007 984**
**B1**

(12) **EUROPÄISCHE PATENTSCHRIFT**

(45) Veröffentlichungstag der Patentschrift: **11.11.81**

(51) Int. Cl.³: **F 02 P 5/04, F 02 D 5/00**

(21) Anmeldenummer: **79101769.2**

(22) Anmeldetag: **05.06.79**

(54) Einrichtung zum Steuern der Zünd- und/oder Kraftstoffeinspritzvorgänge bei Brennkraftmaschinen.

(30) Priorität: **09.08.78 DE 2834796**
**22.11.78 DE 2850534**

(43) Veröffentlichungstag der Anmeldung:
**20.02.80 Patentblatt 80/4**

(45) Bekanntmachung des Hinweises auf die Patenterteilung:
**11.11.81 Patentblatt 81/45**

(84) Benannte Vertragsstaaten:
**DE FR GB SE**

(56) Entgegenhaltungen:
**DE - A - 2 714 266**
**DE - A - 2 732 471**
**DE - A - 2 801 641**
**DE - A - 2 812 327**

**PROCEEDINGS OF THE IDEE, Vol. 66, Nr. 2,**
**Februar 1978,**
**New York, US,**
**J. MARLEY: "Evolving microprocessors which better meet the needs of automotive electronics", Seiten 142 bis 150**

(73) Patentinhaber: **ROBERT BOSCH GMBH**
**Postfach 50**
**D-7000 Stuttgart 1 (DE)**

(72) Erfinder: **Jeenicke, Edmund**
**Stuttgarter Strasse 102**
**D-7141 Schwieberdingen (DE)**
Erfinder: **Klötzner, Winfried, Dipl.-Ing.**
**Hauptstrasse 8**
**D-7133 Maulbronn (DE)**
Erfinder: **Meichle, Clemens, Ing. grad.**
**Ziegelgartenstrasse 1**
**D-7143 Vaihingen (DE)**
Erfinder: **Schenk, Manfred, Ing. grad.**
**Neckarstrasse 12**
**D-7012 Fellbach (DE)**
Erfinder: **Gorille, Ingo, Dr.-Ing.**
**Ahornweg 11**
**D-7141 Oberriexingen (DE)**

**0 007 984**

### Einrichtung zum Steuern der Zünd- und/oder Kraftstoffeinspritzvorgänge bei Brennkraftsmaschinen

**Stand der Technik**

Die Erfindung geht aus von einer Einrichtung nach der Gattung des Hauptanspruchs. Mikroprozessoren enthaltende Steuereinrichtungen in Kraftfahrzeugen sind z.B. bereits aus folgenden Literaturstellen bekannt:

Electronics, January 20, 1977, Seite 102 ff,
Electronics Design 1, January 4, 1977, Seite 34 ff,
Elektronik, 1977, Heft 4, Seite 48 ff,
SAE—Paper Nr. 750 432, Application of Microprocessors to the Automobile, Seite 65 ff,
etz-b, Band 28, 1976, Heft 15, Seite 496 ff,
Computer, August 1974, Seite 33 ff.

Weiterhin sind fest verdrahtete Rechner zur Steuerung von Vorgängen im Kraftfahrzeug, bzw. in der Brennkraftmaschine, z.B. aus der DE—A—2 504 843 (US—A—4 063 539) bekannt. Ein solcher fest verdrahteter Rechner hat gegenüber einem Mikroprozessor-System den Nachteil schlechterer Variabilität, während die bekannten Mikroprozessor-Systeme in Abhängigkeit von der notwendigen Eingabe/Ausgabe-Einheit und der davon wiederum abhängigen notwendigen Speicherwerte im Festwertspeicher aufgrund aufwendiger Programme zur Aufbereitung und Verarbeitung der extern angelegten Signale mehr oder weniger langwierige und damit langsame Rechenprozesse ausführen müssen, die insbesondere bei höheren Drehzahlen eine Beschränkung auf Kosten der Rechengenauigkeit erfahren müssen, oder sie müssen eine entsprechend hohe Anzahl von bits aufweisen, insbesondere für die Kraftstoffeinspritzung, bei der üblicherweise mehr als 8 bit benötigt werden.

In der DE—A—27 32.781 ist bereits eine Eingabe/Ausgabe-Einheit beschrieben, in der verschiedene Rechenoperationen ablaufen. Auf die speziellen Probleme zur Erfassung der angesaugten Luftmenge ist jedoch nicht näher eingegangen.

**Vorteile der Erfindung**

Die erfindungsgemäße Einrichtung mit den kennzeichnenden Merkmalen der unabhängigen Patentansprüche hat den Vorteil, daß durch weitgehende Verlagerung von Rechenoperationen, insbesondere Zählvorgängen, in die Eingabe/Ausgabe-Einheit das Mikrorechner-System mit einer geringeren Bit-Zahl ausgelegt werden kann, insbesondere 8 bit. Dabei können gewisse Zählvorgänge, wie die zur Erfassung eines drehzahlabhängigen bzw. drehwinkelabhängigen Zahlenwerts, sowohl für die Zündung, wie auch für die Einspritzung verwendet werden, Die Eingabe/Ausgabe-Einheit ist leicht integrierbar und ermöglicht den programmgesteuerten Ablauf verschiedener Zählvorgänge, für die Mikroprozessoren der heutigen Generation noch nicht geeignet sind.

Durch die in den Unteransprüchen aufgeführten Maßnahmen sind vorteilhafte Weiterbildungen und Verbesserungen der im Hauptanspruch angegebenen Einrichtung möglich. Besonders vorteilhaft ist die Auszählung des von der angesaugten Luftmenge abhängigen Zahlenwerts in der zweiten Zählvorrichtung. Durch diese mehrfache Ausnützung eines Zählers kann der schaltungsmäßige Aufwand, bzw. der Aufwand für die Integration verringert werden.

Weiterhin ist es besonders vorteilhaft, die erste Zählvorrichtung durch Nachschalten zweier Komparatoren zur Steuerung von Zündung und oder Kraftstoffeinspritzung einzusetzen.

Weiterhin ist es besonders vorteilhaft, zur Erhöhung der Genauigkeit eine Drehzahlerkennung vorzusehen, durch die oberhalb einer festlegbaren Drehzahl eine um einen bestimmten Faktor längere Zählzeit für die Auszählung der der Luftmenge proportionalen Zählfrequenz festlegbar ist. Dieser Faktor muß natürlich nach Korrektur Rechenvorgängen in Abhängigkeit von weiteren Parametern der Brennkraftmaschine wieder berücksichtigt, d.h. kompensiert werden. Durch diese Methode ist die Erfassung der Luftmenge auch bei hohen Drehzahlen mit ausreichender Genauigkeit gewährleistet, ohne daß dafür bei niedrigen Drehzahlen zu hohe Zahlenwerte in Kauf genommen werden müssen.

**Zeichnung**

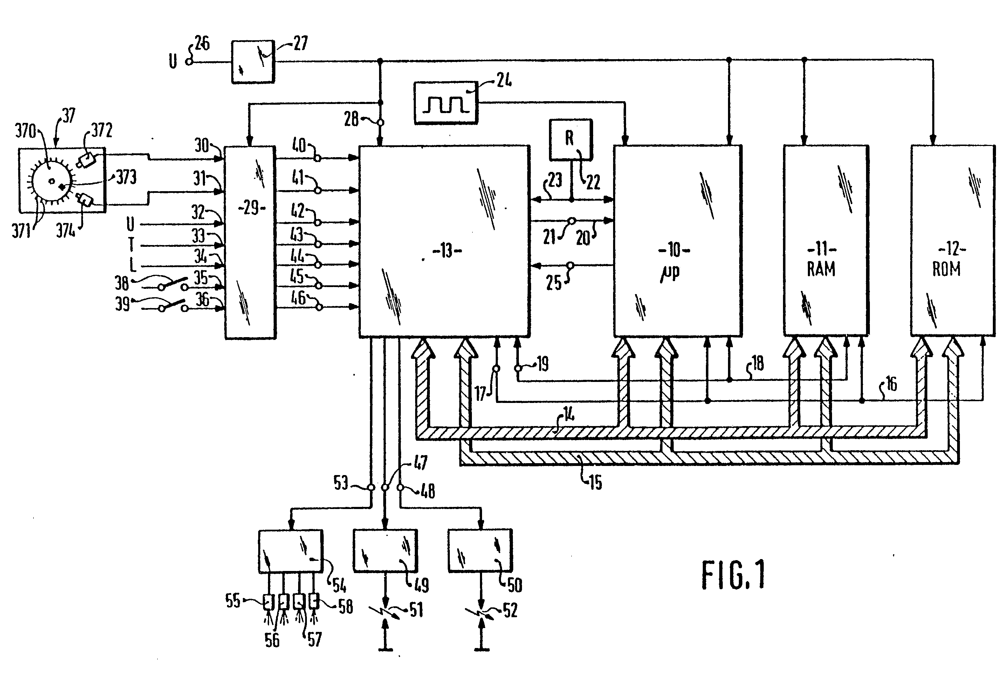

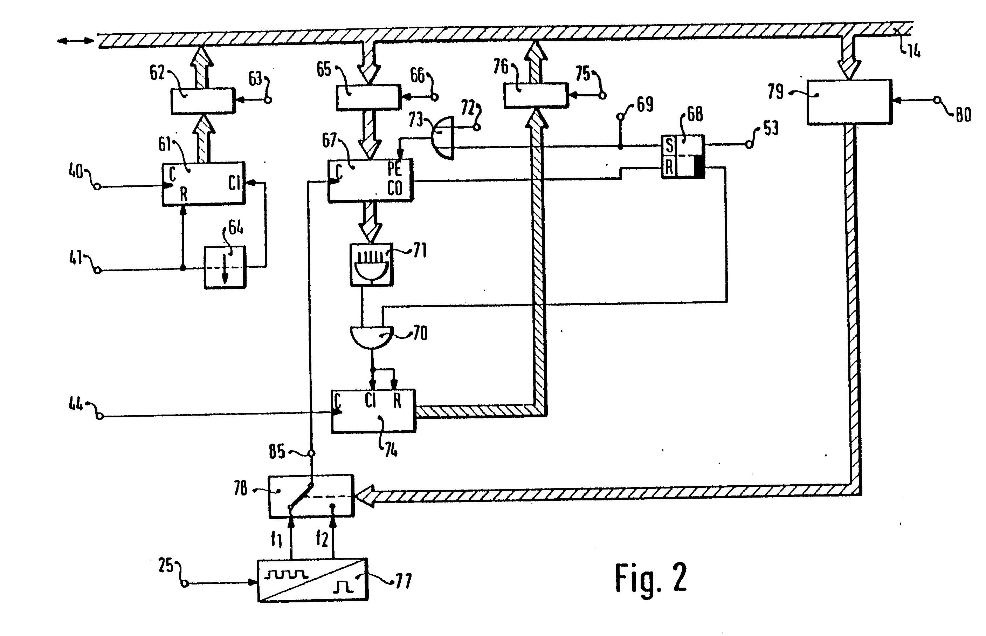

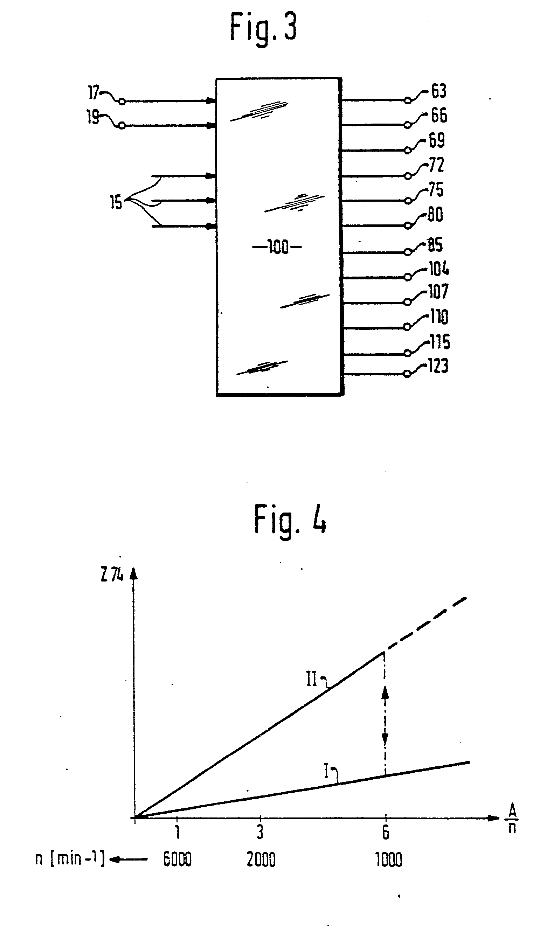

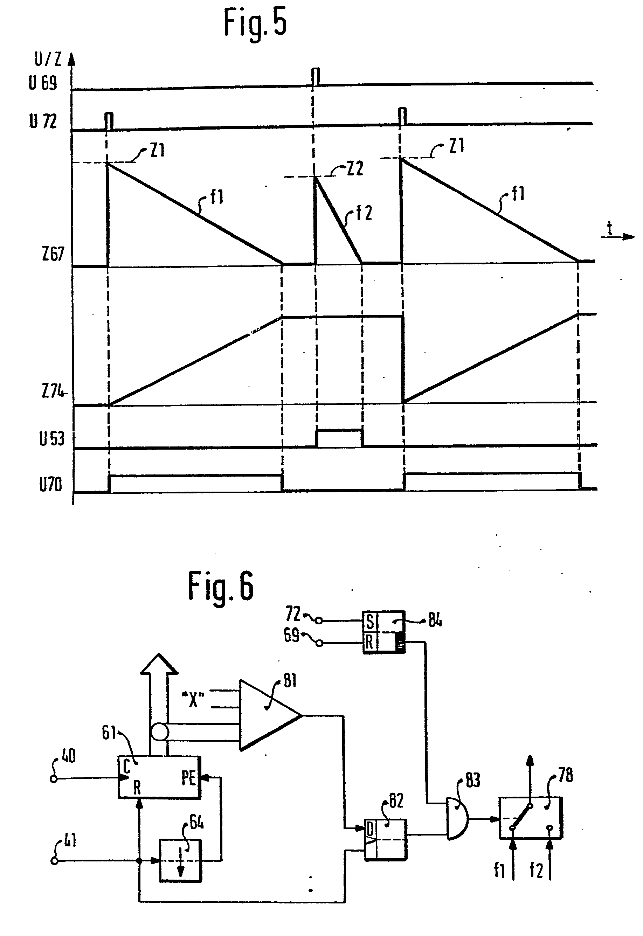

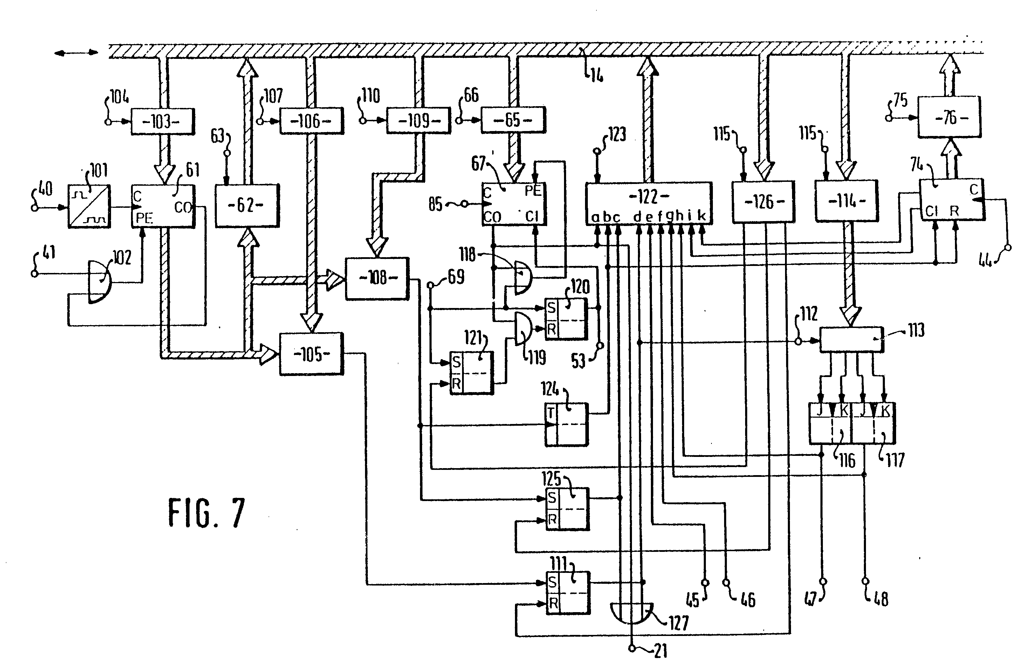

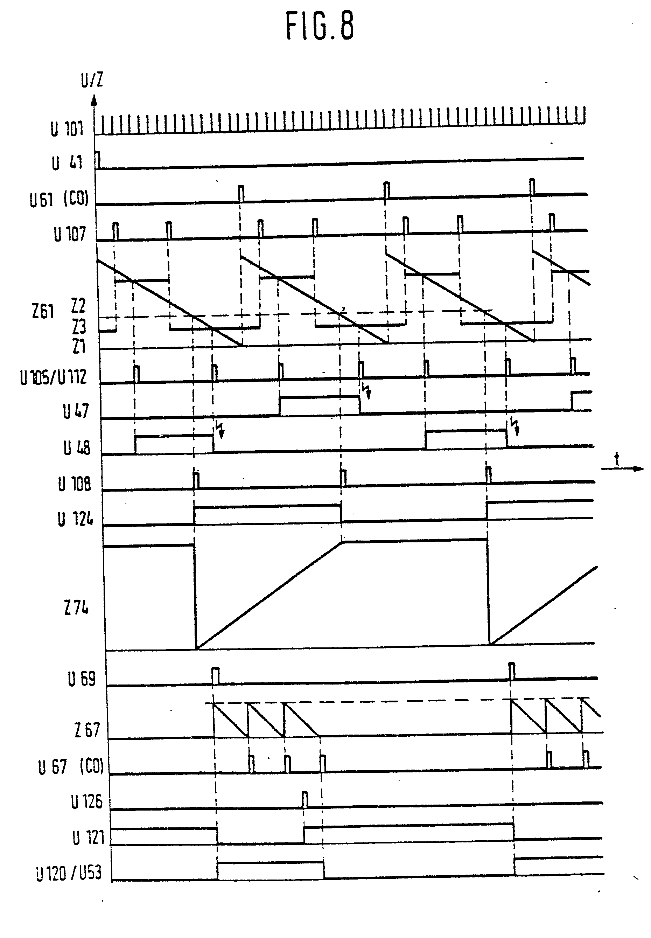

Zwei Ausführungsbeispiele der Erfindung sind in der Zeichnung dargestellt und in der nachfolgenden Beschreibung näher erläutert. Es zeigen Fig. 1 ein Blockschaltbild eines bekannten Mikrorechner-Systems für eine Brennkraftmaschine, Fig. 2 ein erstes Ausführungsbeispiel der Erfindung, Fig. 3 eine Dekodiereinrichtung zur Steuerung der mit dem Datenbus verbundenen Schaltelemente gemäß den Fig. 2 und 7, Fig. 4 ein Diagramm zur Veranschaulichung der Zählgenauigkeit bei verschiedenen Drehzahlen, Fig. 5 ein Diagramm zur Erläuterung der Wirkungsweise der ersten Ausführungsbeispiels, Fig. 6 eine schaltungsmäßige Ausgestaltung einer drehzahlabhängigen Umschaltvorrichtung für Zählfrequenzen, Fig. 7 ein zweites Ausführungsbeispiel der Erfindung und Fig. 8 ein Diagramm zur Erläuterung der Wirkungsweise des zweiten Ausführungsbeispiels.

**0 007 984**

Beschreibung der Ausführungsbeispiele

Bei dem in Fig. 1 dargestellten Mikrorechner-System ist ein Mikroprozessor 10 mit einem Arbeitsspeicher (RAM) 11, mit einem Festwertspeicher (ROM, PROM oder EPROM) 12 sowie mit einer Eingabe/Ausgabe-Einheit 13 über einen Datenbus 14 und einen Adressenbus 15 verbunden. In Abhängigkeit von dem zu übertragenden Informationsgehalt, bzw. in Abhängigkeit von der Anzahl der anwählbaren Adressen kann ein solcher Datenbus 14 z.B. aus drei Einzelleitungen bestehen. Ein die Bauteile 10 bis 12 verbindende Lese-Befehlsleitung 16 ist über eine Klemme 17 mit der Eingabe/Ausgabe-Einheit 13 verbunden und dient dazu, anliegende oder gespeicherte Informationen abzurufen. Eine die Bauteile 10, 11 verbindende Schreib-Befehlsleitung 18 ist über eine Klemme 19 ebenfalls mit der Eingabe/Ausgabe-Einheit 13 verbunden und dient dazu, Informationen in Zwischenspeicher einzulesen. Eine Programmunterbrechungs-Befehlsleitung (Interrupt) 20 führt von der Eingabe/Ausgabe-Einheit 13 über eine Klemme 21 zum Mikroprozessor 10. Diese Leitung dient dazu, bei Vorliegen bestimmter Informationen ein gerade im Mikroprozessor ablaufendes Programm zu unterbrechen. Von einer Rücksetzschaltung 22 führt eine Lösch-Befehlsleitung (Clear) 23 zur Eingabe/Ausgabe-Einheit und zum Mikroprozessor 10. Sie dient dazu, bestimmte Anfangsbedingungen, z.B. bei einem Programmbeginn, zu schaffen. Ein Frequenzgenerator 24 ist mit dem Mikroprozessor 10 verbunden, um diesem Baustein eine Grundtaktfrequenz zuzuführen. Vorzugsweise eine daraus durch Teilung gewonnene Frequenz wird über die Klemme 25 der Eingabe/Ausgabe-Einheit zugeführt. Eine eine Versorgungsspannung führende Klemme 26 ist mit einer Spannungsstabilisierungsschaltung 27 verbunden, deren stabilisierte Ausgangsspannung einer Klemme 28, sowie sämtlichen Bauelementen zugeführt ist, die Elektronik beinhalten.

Eine Eingangsschaltung 29 weist sieben Eingänge 30 bis 36 auf, die mit externen Signalgebern verbunden sind. Dadurch wird der jeweilige Zustand, z.B. einer Brennkraftmaschine an das Rechnersystem gemeldet. Eine mit den Eingängen 30, 31 verbundene Geberanordnung 37 besteht aus einer vorzugsweise mit der Kurbelwelle einer Brennkraftmaschine verbundenen Zahnscheibe 370, auf der umfangsseitig eine Vielzahl von Zähnen 371 angebracht sind. Diese Zähne werden durch einen ersten Aufnehmer 372 abgetastet, indem jeder ferromagnetische Zahn in diesem induktiven Aufnehmer 372 eine Flußänderung hervorruft, die ein Spannungssignal zur Folge hat. Die dadurch erzeugte drehzahlabhängige Signalfolge wird dem Eingang 30 zugeführt. Statt ferromagnetischer Zähne können auch andere Marken vorgesehen sein, die durch andere Aufnehmer abtastbar sind. So kann z.B. die Scheibe in Umfangsrichtung streifenförmig magnetisiert sein oder eine Lochanordnung aufweisen, die durch optische Vorrichtungen abtastbar ist. Eine Bezugsmarke 373 ist ebenfalls auf der Scheibe 370 angeordnet. Diese Bezugsmarke 373 kann natürlich auch auf einer anderen Scheibe oder einem anderen Drehteil angeordnet sein. Die Bezugsmarke 373 wird von einem zweiten Aufnehmer 374 abgetastet und das Bezugsmarkensignal dem Eingang 31 zugeführt. Weitere Informationen der Brennkraftmaschine, bzw. des Fahrzeugs liegen als Versorgungsspannung U, Temperatur T, angesaugte Luftmenge L, Stellung des Drosselklappenschalters 38 und Stellung des Startschalters 39 an den Eingängen 32 bis 36 an. Die Zahl dieser weiteren Informationen ist noch beliebig erweiterbar und nicht auf die dargestellten Informationen beschränkt. Die dargestellten sieben Eingangsinformationen an den Eingängen 30 bis 36 werden in der Eingangsschaltung aufbereitet, entstört und soweit erforderlich, digitalisiert. Ausgangsseitig werden diese Informationen über die Klemme 40 bis 46 der Eingabe/Ausgabe-Einheit 13 zugeführt. Sofern Informationen an der Eingangsschaltung 29 in analoger Form vorliegen, werden sie durch einen in der Eingangsschaltung 29 enthaltenen Analog-Digital-Wandler, z.B. einen VCO: voltage controlled-oscillator, in Frequenzen umgewandelt. Eine Signalaufbereitung kann z.B. mit Hilfe von Schmitt-Triggern erfolgen. Zur Entstörung können an sich bekannte Entprell-Schaltungen sowie Schaltungen zum Schutz gegen Überspannung eingesetzt werden.

Zwei Endstufenausgänge der Eingabe/Ausgabe-Einheit sind über Klemmen 47, 48 mit Schaltendstufen 49, 50 verbunden, die als Zündungsendstufen ausgebildet sind. Solche Zündungsendstufen enthalten in bekannter Weise einen Halbleiterschalter im Primärstomkreis einer Zündspule, in deren Sekundärstromkreis wenigstens eine Zündstrecke 51, 52, bzw. Zündkerze geschaltet ist. Eine weitere Schaltendstufe 54 zur Steuerung der Kraftstoffeinspritzung über vier dargestellte Einspritzdüsen 55 bis 58 ist ebenfalls mit der Eingabe/Ausgabe-Einheit 13 verbunden.

Die Wirkungsweise des dargestellten, an sich bekannten Mikroprozessors-Systems ist bekannt und vielfach in der Literatur beschrieben. Neben dem eingangs genannten Stand der Technik sei in diesem Zusammenhang vor allem auf die Gebrauchshandbücher der verschiedenen Mikroprozessor-Hersteller verwiesen, in denen detailliert sowohl der Aufbau und die Beschaltung der einzelnen Bausteine, wie auch deren Wirkungsweise und Programmierung beschrieben ist. Aufbauvarianten und Schaltungsmöglichkeiten, bzw. -Vorschläge sind sehr detailliert angegeben. Als Beispiel sei auf die Handbücher der Firma RCA "User Manual for the CDP 1802 Cosmac Microprocessor MPM-201A" und "RCA, Integrated Circuits, SSD-210, 4—76" verwiesen.

Im Rahmen eines im Festwertspeicher 12 gespeicherten Programms werden vom Mikroprozessor 10 extern an der Eingabe/Ausgabe-Einheit 13 anliegende Informationen im Zusammenhang mit fest gespeicherten Informationen verarbeitet. Das errechnete Ergebnis, im vorliegenden Fall die Signale zur Steuerung von Zündung und Einspritzung, werden den Schaltendstufen 49, 50, 54, weitergegeben zur Ausführung der gewünschten Schaltbefehle. Endergebnisse und Zwischenergebnisse

3

werden zum Teil im Arbeitsspeicher 11 zwischengespeichert, um dann bei Bedarf durch den Mikroprozessor wieder abgerufen zu werden.

Die Anzahl der verwendeten Mikroprozessoren, Festwertspeicher und Arbeitsspeicher ist nicht gemäß der Darstellung beschränkt, sondern kann in Abhängigkeit der zu verarbeitenden Informationen, dem Umfang des Programms und dem Umfang der gespeicherten Daten beliebig erweitert werden. Diese Anzahl hängt natürlich auch vom jeweils verwendeten Bauteiltyp ab, bzw. von dessen Arbeits- und Speichermöglichkeiten.

In dem in Fig. 2 dargestellten Ausführungsbeispiel der Erfindung ist die mit dem Drehzahlsignal beaufschlagte Klemme 40 mit dem Takteingang C eines ersten Zählers 61 verbunden, dessen Zahlenausgänge über eine erste Torstufe 62 mit dem Datenbus 14 verbunden sind. Die vorzugsweise als Parallelschaltung verschiedener Transmissions-Gatter ausgebildete erste Torstufe 62 wird über eine Klemme 63 gesteuert. Die das Bezugsmarkensignal führende Klemme 41 ist sowohl mit dem Rücksetzeingang R des Zählers 61, wie auch über ein Zeitglied 64 mit dem Toreingang (Carry In) CI dieses Zählers 61 verbunden. Das Zeitglied 64 ist für die vorliegende digitale Schaltungsausführung vorzugsweise ebenfalls als Zähler ausgebildet, der eine Festfrequenz bis zu einen bestimmten Zählerstand zählt. Die dargestellte Schaltungsausführung 61 bis 64 zur Ermittlung eines drehzahlabhängigen Zahlenwerts kann in vielfacher Weise realisiert werden, z.B. auch gemäß der DE—A—27 32 781.

Der Datenbus 14 ist weiterhin über einen ersten Zwischenspeicher 65, dessen Übernahmeeingang über eine Klemme 66 gesteuert wird, mit den Setzeingängen des zweiten Zählers 67 verbunden, dessen Überlaufausgang (Carry Out) CO mit dem Rücksetzeingang R eines Flipflops 68 verbunden ist. Der Setzeingang des Flipflops 68 wird über eine Klemme 69 gesteuert. Ein Ausgang des Flipflops 68 ist an die Klemme 53 angeschlossen, und der zweite, komplementäre Ausgang ist mit einem Eingang eines UND-Gatters 70 verbunden. Die Zahlenausgänge des zweiten Zählers 67 sind über eine Dekodierstufe 71 an einen zweiten Eingang des UND-Gatters 70 angeschlossen. Soll der niedrigste Zählerstand dekodiert werden, so kann die Dekodierstufe 71 als UND-Gatter ausgebildet sein, oder der Ausgang CO wird anstelle dieser Dekodierstufe 71 verwendet. Die Klemme 69, sowie eine weitere Klemme 72 sind über ein ODER-Gatter 73 mit dem Ladeeingang (preset enable) PE des zweiten Zählers 67 verbunden.

Die Klemme 44 ist mit dem Takteingang C eines dritten Zählers 74 verbunden, dessen Toreingang CI sowie dessen Rücksetzeingang R an den Ausgang des UND-Gatters 70 angeschlossen sind Die Zahlenausgänge dieses dritten Zählers 74 sind über eine zweite, über eine Klemme 75 gesteuerte Torstufe 76 mit dem Datenbus 14 verbunden.

Die die Grundtaktfrequenz führende Klemme 25 ist mit dem Eingang einer Frequenzuntersetzerstufe 77 verbunden, an deren beiden Ausgängen zwei, vorzugsweise um den Faktor 4 verschiedene Ausgangsfrequenzen anliegen. Diese beiden Ausgangsfrequenzen sind über eine Umschaltvorrichtung 78 wahlweise dem Takteingang C des zweiten Zählers 67 zuführbar. Zur Steuerung von Umschaltvorgängen ist die Umschaltvorrichtung 78 über eine Umschalt-Dekodierstufe 79 mit dem Datenbus 14 verbunden. Die Auslösung der Schaltbefehle erfolgt über die Klemme 80.

Die Eingangssignale für die dargestellte Schaltung, sowie für die in den folgenden Figuren dargestellten Schaltungen sind vorzugsweise mit der Grundfrequenz gerastert, bzw. synchronisiert. Für diesen Zweck notwendige Synchronisierungsstufen sind jedoch der Einfachheit halber nicht näher dargestellt und aus der eingangs genannten DE—A—2 504 843, Fig. 4 bekannt. Die dort gezeigte Schaltung dient gleichzeitig der Frequenzverdopplung. Ebenfalls nicht dargestellt sind eventuell an den Ausgängen benötigte Verstärkerstufen. Sie können je nach Bedarf und Signalpegel vorgesehen werden.

Die in Fig. 3 dargestellte Dekodiereinrichtung 100 ist eingangsseitig mit dem Adressenbus 15 sowie über die Klemmen 17, 19 mit der Lese-Befehlsleitung 16 und der Schreib-Befehlsleitung 18 verbunden. Ausgangsseitig ist die Dekodiereinrichtung 100 mit den Klemmen 63, 66, 69, 72, 75, 80, 85, 104, 107, 110, 115 und 123 verbunden. Die Dekodiereinrichtung 100 ist ebenfalls in der Eingabe/Ausgabe-Einheit 13 enthalten und dient zum Steuern der mit den besagten Klemmen verbundenen Torstufen, Zwischenspeichern, Dekodierstufen und Zählern. In Abhängigkeit von den anliegenden Eingangssignalen erscheint an einer oder an mehreren Ausgangsklemmen der Dekodiereinrichtung 100 ein Signal, durch das die jeweils damit verbundene Stufe betätigt wird. Dadurch kann z.B. ein Signal eine Torstufe passieren oder ein Zähler einen anliegenden Zahlenwert übernehmen. Die Reihenfolge dieser Befehle wird über das Programm im Mikroprozessor festgelegt und als Befehl über die Leitungen 15, 16, 18 ausgegeben.

Die prinzipielle Wirkungsweise der in den Figuren 2 und 3 dargestellten Eingabe/Ausgabe-Einheit 13 im Zusammenhang mit dem in Fig. 1 dargestellten System wird im folgenden anhand der in den Fig. 4 und 5 dargestellten Diagramme erläutert. Wesentlich für die Einspritzung und auch vorteilhaft für die Zündung ist die Erfassung der angesaugten Luftmenge über einen nicht näher dargestellten Luftmengenmesser. Falls der verwendete Luftmengenmesser ein analoges Ausgangssignal liefert, muß dieses in der Eingangsschaltung 29 in eine Frequenz umgewandelt werden, die der Luftmenge proportional ist. Diese Frequenz wird über die Klemme 44 im Zähler 74 gezählt und zwar während einer vom Zähler 67 vorgegebenen Zeit. Der Zählerinhalt des Zählers 74 kann jederzeit durch den Mikroprozessor über die Torstufe 76 durch ein Signal an der Klemme 75 abgefragt werden. Die durch den Zähler 67 vorgebbare Zählzeit kann einmal durch dort wählbare Zählfrequenzen und zum anderen durch verschiedene Zahlenwerte vorgegeben werden, die vom Mikroprozessor über den Datenbus 14 und dem Zwischenspeicher 65 in diese Zähler 67 übernommen werden können. Zur Berechnung sowohl des richtigen Zündwinkels muß die Motordrehzahl n erfaßt werden Dies erfolgt über die Anordnung 61 bis 64. Auf ein Bezugsmarkensignal an der Klemme 41 hin wird das Zeitglied 64 getriggert und während der Haltezeit dieses Zeitglieds 64 werden in den Zähler 61 Signale der Geberanordnung 37 eingezählt. Der erreichte Endzählerstand ist somit drehzahlproportional und kann über die Torstufe 62 durch ein Signal an der Klemme 63 vom Mikroprozessor abgerufen werden. Er liegt dann im Mikroprozessor vor und kann für die Einspritzung mit verwendet werden. Für die Einspritzung verwendet man vorteilhafterweise den Kehrwert von n, bzw. einen geeignet normierten Wert A/n, um im Zahlenbereich günstig zu liegen. Die Division wird im Mikroprozessor durchgeführt, sie kann dejoch auch durch eine an sich bekannte digitale Division in der Eingabe/Ausgabe-Einheit erfolgen. Mit dem Resultat Z1 wird der Zähler 67 auf ein Signal an der Klemme 72 hin geladen und mit einer festen Taktfrequenz f abwärts gezählt. Während dieser Zeit, die der Periodendauer entspricht liegt am Ausgang der Dekodierstufe 71 ein 1-Signal, durch das der Toreingang CI des Zählers 74 freigegeben ist. Dadurch wird während dieser Zeit in den Zähler 74 die der Luftmenge proportionale Frequenz eingezählt. Der am Ende der genannten Zeit vorliegende Zählerstand im Zähler 74 ist der unkorrigierten Einspritzzeit proportional. Über die Torstufe 76 kann er abgerufen werden und wird im Mikroprozessor durch Korrekturwerte, die von anderen Einflußgrößen, bzw. Parametern, stammen und ebenfalls in nicht dargestellter Weise über die Eingabe/Ausgabe-Einheit dem Mikroprozessor zugeführt werden noch multipliziert. Solche weiteren Parameter können in ähnlicher Weise wie das Luftmengen-Signal in Zahlenwerte umgewandelt werden und über eine Torstufe in den Mikroprozessor übernommen werden. Dieser modifizierte Einspritz-Zahlenwert Z2 wird auf ein Signal an der Klemme 69 über den Zwischenspeicher 65 in den Zähler 67 übernommen und ausgezählt. Während des Auszählvorgangs ist das Flipflop 68 gesetzt und gibt an der Ausgangsklemme 53 ein Signal U53 ab. Dieses Signal gibt die Einspritzzeit vor und wird durch ein Überlaufsignal am Ausgang CO des Zählers 67, durch das ein Rücksetzen des Flipflops 68 bewirkt wird, beendet.

Aus Fig. 4, Kurve I, ergibt sich, daß man bei Leerlaufdrehzahlen unter 1.000 Umdrehungen pro Minute mit diesem Verfahren eine gute Genauigkeit erzielen kann. Bei hohen Drehzahlen werden die Zeiten so kurz und damit die erreichten Zählergebnisse so klein, daß die Genauigkeit wesentlich verschlechtert wird. Die Kurve generell durch z.B. höhere Frequenzen anzuheben, hätte den Nachteil, daß man die Zähler für sehr hohe Zahlenwerte auslegen müßte, die dann bei geringen Drehzahlen erreicht würden (vergleiche Kurve II).

Um dieser Sachlage Rechnung zu tragen wird ab einer bestimmten Drehzahl, z.B. 1.000 Umdrehungen pro Minute, die Torzeit für den Zähler 74 um einen bestimmten Faktor vergrößert. Im dargestellten Beispiel ist dieser Faktor 4.

Im Mikroprozessor wird das Überschreiten dieser festlegbaren Drehzahl erkannt und über den Datenbus 14 sowie über die Dekodiereinrichtung 79 wird die Umschaltvorrichtung 78 betätigt, wodurch am Takteingang des Zählers 67 nunmehr statt der Frequenz f1 die um den Faktor 4 kleinere Frequenz f2 anliegt. Am Ende des Abwärtszählvorgangs ab dem Zahlenwert Z1 erfolgt wiederum die Umschaltung auf die Frequenz f1, die zum Abwärtszählen des Zahlenstands Z2 benötigt wird. Unterhalb der einstellbaren Grenzdrehzahl erfolgen sämtliche Abwärtszählvorgänge mit der Frequenz f1. Durch diese um den Faktor 4 verlängerte Torzeit wird im Zähler 74 ein um den Faktor 4 erhöhter Zählerstand erreicht. Nach Korrekturvorgängen durch andere Kraftfahrzeugparameter im Mikroprozessor muß der erhaltene Zahlenwert wiederum um den Faktor 4 geteilt werden, um die vierfache Torzeit auszugleichen. Der Faktor 4 ist deshalb günstig, da die entsprechende Multiplikation, bzw. Division durch einfache Verschiebeoperationen vorgenommen werden kann. Ebenso günstig sind alle anderen Zweierpotenzen.

Statt einer Division um diesen bestimmten Faktor zum Ausgleich der verlängerten Torzeit kann die Auszählung des Zählerstandes Z2 auch mit einer um diesen Faktor erhöhten Frequenz ausgeführt werden. Es müßte hierzu eine dritte Frequenz zur Verfügung gestellt werden.

Eine analoge Lösung besteht darin, die Periodendauer unterhalb einer festlegbaren Grenzdrehzahl um einen bestimmten Faktor zu verkürzen, um den maximalen Zählerstand des Zählers 74 nicht zu überschreiten. Weiterhin ist es möglich zur Verlängerung oder zur Verkürzung der Torzeit für den Zähler 74 anstelle der Veränderung der Zählfrequenz für den Zähler 67 dessen Anfangszahlenwert Z1 mit einem Faktor zu multiplizieren oder zu dividieren.

Zur Erkennung der wählbaren Grenzdrehzahl kann als Kriterium z.B. der Endzählerstand des Zählers 61 oder des Zählers herangezogen werden. Durch Vergleich solcher, in regelmäßigen Abständen übernommener Zählerstände im Mikroprozessor mit dort gespeicherten Vergleichswerten ist es möglich, solche Drehzahlgrenzen zu erkennen. Eine solche Drehzahlerkennung kann jedoch auch in der Eingabe/Ausgabe-Einheit 13 erfolgen, z.B. durch eine Schaltung gemäß Fig. 6. Die Beschaltung der Klemmen 40, 41 mit den Bauteilen 61, 64 entspricht Fig. 2. Die Zahlenausgänge des Zählers 61 sind zusätzlich mit Eingängen eines digitalen Komparators 81 verbunden, dessen Vergleichseingänge vorzugsweise durch feste Verdrahtung mit dem Zahlenwert X beaufschlagt sind, der dieser Grenzdrehzahl entspricht. Der Ausgang des Komparators ist mit dem D-Eingang eines D-Flipflops 82 verbunden, dessen Takteingang an die Klemme 41 angeschlossen ist. Der Ausgang des Flipflops 82 ist über ein UND-Gatter 83 an den Steuereingang der Umschaltvorrichtung 78 angeschlossen. Die Klemme 69 ist mit dem Setzeingang S und die Klemme 72 mit dem Rücksetzeingang R eines Flipflops 84 verbunden, dessen komplementärer Ausgang an einen weiteren Eingang des UND-Gatters 83 angeschlossen ist.

Unterhalb der Grenzdrehzahl erreicht der Zähler 61 nie den Zählerstand X, wodurch am Ausgang des Flipflops 82 und damit am Ausgang des UND-Gatters 83 ständig ein O-Signal liegt. Die Umschaltvorrichtung 78 verbindet somit ständig den Takteingang des Zählers 67 mit der Frequenz f1. Wird die Grenzdrehzahl und somit der Zählerendstand X überschritten, so wird das Flipflop 82 durch ein Triggersignal an der Klemme 41 gesetzt und schaltet die Umschaltvorrichtung 78 auf die Frequenz f2 um, sofern am zweiten Eingang des UND-Gatters 83 ebenfalls ein 1-Signal liegt. Dies ist der Fall, wenn das Flipflop 84 durch ein Rücksetzsignal U69 rückgesetzt wurde. Durch ein Signal U72 wird das Flipflop 84 wieder gesetzt, das UND-Gatter 83 wird dadurch gesperrt und die Umschaltvorrichtung 78 verbindet wiederum den Takteingang des Zählers 67 mit der Frequenz f1 bis ein neues Rücksetzsignal U69 erscheint.

In dem in Fig. 7 dargestellten zweiten Ausführungsbeispiel der Erfindung ist die mit dem Drehzahlsignal beaufschlagte Klemme 40 über eine Frequenzvervielfachungsstufe 101 mit dem Takteingang C des ersten Zählers 61 verbunden. Die das Bezugsmarkensignal führende Klemme 41 ist über ein ODER-Gatter 102 mit dem Ladeeingang PE des ersten Zählers 61 verbunden. Sein Überlaufausgang CO ist mit einem weiteren Eingang des ODER-Gatters 102 verbunden. Der Datenbus 14 ist über einen ersten Zwischenspeicher 103, dessen Übernahmeeingang über eine Klemme 104 gesteuert wird, an die Zahleneingänge des ersten Zählers 61 angeschlossen. Die Zahlenausgänge dieses Zählers 61 sind sowohl an erste Vergleichseingänge eines Komparators 105 angelegt, die auch über die Torstufe 62 mit dem Datenbus 14 verbunden sind. Zweite Vergleichszahleneingänge des Komparators 105 sind über einen weiteren Zwischenspeicher 106, der über eine Klemme 107 gesteuert wird, mit dem Datenbus 14 verbunden. Die Zahlenausgänge des ersten Zählers 61 sind weiterhin an Vergleichszahleneingänge eines zweiten Komparators 108 angelegt, dessen zweite Vergleichszahleneingänge über einen Zwischenspeicher 109 mit dem Datenbus 14 verbunden sind. Der Zwischenspeicher 109 wird über eine Klemme 110 gesteuert.

Der Ausgang des Komparators 105 ist mit dem Setzeingang S eines Flipflops 111 verbunden, dessen Ausgang über eine Klemme 112 mit dem Steuereingang einer Auswahllogik 113 verbunden ist. Die Auswahl der einzelnen Endstufenkanäle erfolgt vom Datenbus 14 her über eine erste Dekodierstufe 114, deren Ausgänge ebenfalls mit der Auswahllogik 113 verbunden sind und die über eine Klemme 115 gesteuert wird. Eine detailliertere Ausführungsform der Bauteile 113, 114 sind im eingangs angegebenen Stand der Technik dargestellt. Die J- und K-Eingänge zweier JK-Flipflops 116, 117 sind mit Ausgängen der Auswahllogik 113 verbunden. Je ein Ausgang der beiden Flipflops 116, 117, ist mit einer der beiden Klemmen 47, 48 zur Steuerung der Schaltendstufen 49, 50 verbunden. In einer einfacheren Ausführungsform kann auch nur eine über ein Flipflop gesteuerte Schaltendstufe vorgesehen werden. Die Hochspannungsverteilung auf die einzelnen Zylinder der Brennkraftmaschine erfolgt dann über einen mechanischen Hochspannungsverteiler.

Wie beim ersten Ausführungsbeispiel ist der Zähler 67 über den Zwischenspeicher 65 mit dem Datenbus 14 verbunden. Sein Überlaufausgang CO ist einmal über ein ODER-Gatter 118 mit seinem Ladeeingang PE verbunden und weiterhin über ein UND-Gatter 119 an den Rücksetzeingang R eines Flipflops 120 angeschlossen. Der Ausgang dieses Flipflops 120 ist einmal mit dem Toreingang CI des Zählers 67 und weiterhin mit der Ausgangsklemme 53 verbunden. Die Klemme 69 ist an einen weiteren Eingang des ODER-Gatters 118, sowie an die Setzeingänge S des Flipflops 120 und eines weiteren Flipflops 121 angeschlossen. Der komplementäre Ausgang des Flipflops 121 ist mit einem weiteren Eingang des UND-Gatters 119 verbunden.

Zur Meldung der Überlaufsignal an den Mikroprozessor ist der Überlaufausgang CO des Zählers 67 an einen Eingang a eine Rückmelde-Torstufe 122 angeschlossen. Die Ausgänge dieser, über eine Klemme 123 gesteuerten Rückmelde-Torstufe 122 sind mit dem Datenbus 14 verbunden. Weitere Eingänge b bis k sind mit den Ausgängen zweier weiterer Flipflops 124, 125 sowie des Flipflops 111, mit den beiden Klemmen 45, 46, mit den Ausgängen der beiden Flipflops 116, 117 und schließlich mit zwei höherwertigen Bit-Ausgängen des Zählers 74 verbunden. Dabei sind die Eingänge a, c und d der Rückmelde-Torstufe 122 auch an Eingänge eines ODER-Gatters 127 angeschlossen, dessen Ausgang zur Zuführung von "Interrupt"-Signalen mit der Klemme 21 verbunden ist.

Der Ausgang des zweiten Komparators 108 ist mit dem Takteingang des z.B. als T-Flipflop ausgebildeten Flipflops 124 sowie mit dem Setzeingang des Flipflops 125 verbunden. Der Ausgang des Flipflops 124 ist sowohl mit dem Toreingang CI wie auch mit dem Rücksetzeingang R des Zählers 74 verbunden. Dieser Zähler 74 ist gemäß dem ersten Ausführungsbeispiel über eine Torstufe 76 mit Datenbus 14 verbunden. Der Takteingang C dieses Zählers 74 ist mit der eine luftmengenproportionalen Frequenz führenden Klemme 44 verbunden. Zur mehrfachen Ausnutzung des Zählers 74 kann dieser Takteingang jedoch auch über eine Umschaltvorrichtung gemäß Fig. 2 mit weiteren Festfrequenzen sowie weiteren, parameterabhängigen Frequenzen verbunden werden. Neben der Festlegung eines Zahlenwerts, aus dem die Einspritzzeit abgeleitet wird, kann der Zähler 74 zyklisch auch zur Errechnung weiterer Zahlenwerte eingesetzt werden, aus denen sich z.B. die Stellung eines Magnetventils, die Drosseldrucksteuerung für automatische Getriebe, der Kilometerzähler, die elektrische Uhrensteuerung sowie Schrittmotoren überwachen bzw. steuern lassen. Diese zyklische Steuerung erfolgt durch den Mikroprozessor, wobei die Zählfrequenzumschaltung über eine Umschalt-Dekodierstufe 79 gemäß dem ersten Ausführungsbeispiel erfolgen kann.

Die Steuerung der Rücksetzeingänge R der Flipflops 111, 121, 125 erfolgt über eine mit dem Datenbus 14 verbundene, zweite Dekodierstufe 126, deren Steuereingang mit der Klemme 115 verbunden ist.

Die Wirkungsweise des in Fig. 7 dargestellten zweiten Ausführungsbeispiels soll im folgenden anhand des in Fig. 8 dargestellten Signaldiagramms erläutert werden. Die an der Klemme 40 anliegende Drehzahl-Signalfolge wird in ihrer Frequenz in der Frequenzvervielfachungsstufe 101 vervielfacht, vorzugsweise verdoppelt, und erscheint als Signalfolge U 101 am Takteingang des als Rückwärtszahler ausgebildeten ersten Zählers 61. Die in Fig. 8 dargestellten Signalfolgen sind für den Fall konstant bleibender Drehzahlparameter dargestellt. Das Bezugsmarkensignal U41 bewirkt am Ladeeingang PE ein Setzen des Zählers 61 mit dem im ersten Zwischenspeicher 103 gespeicherten Zahlenwert. Dieser zwischengespeicherte Zahlenwert wurde bereits vorher auf ein Signal an der Klemme 104 hin vom Datenbus 14 übernommen. Der übernommene Zahlenwert wird im Takt der Signalfolge U101 abwärts gezählt, bis beim Zählerstand Null ein Überlaufsignal U61 am Überlaufausgang CO entsteht. Dieses Überlaufsignal U61 bewirkt wiederum über das ODER-Gatter 102 ein erneutes Setzen des Zählers 61. Es wirkt somit wie zusätzliche, interne Bezugsmarkensignale. Der vom Zwischenspeicher 103 übernommene Zahlenwert ist variabel und wird vom Programm in Abhängigkeit der jeweils anliegenden Parameter festgelegt. Der am Ausgang der Zählers 61 anliegende Zählerstand kann auf ein Signal an der Klemme 63 vom Mikroprozessor über den Datenbus 14 und die Torstufe 62 zu jedem beliebigen Zeitpunkt abgefragt werden.

In dem Zwischenspeicher 106 werden im Takt der an seinem Steuereingang anliegenden Signalfolge U107 die jeweils über den Datenbus anliegenden Zahlenwerte zwischengespeichert. Diese Zahlenwerte wechseln im dargestellten Beispiel zwischen Z1 und Z2. Diese zwischengespeicherten Zahlenwerte liegen an den zweiten Vergleichseingängen des Komparators 105 an. Erreicht der Zählerstand im Zähler 61 den Zahlenwert Z2, so gibt der Komparator 105 ein erstes Ausgangssignal ab und bei Erreichen des Zählerstands Z1 ein zweites. Diese Ausgangssignale sind als Signalfolge U105/U112 dargestellt. Durch die Signale dieser Signalfolge wird jeweils das Flipflop 111 gesetzt und durch Signale der Dekodierstufe 126 jeweils rückgesetzt. Durch die Ausgangssignale des Flipflops 111 wird über die Auswahllogik 113, die wiederum durch die Dekodierstufe 114 gesteuert wird, abwechselnd die Flipflop-Anordnung 116, 117 gesetzt und rückgesetzt, so daß an deren Ausgängen die Signalfolgen U47 und U48 entstehen. Dies kann durch die verschiedensten Logikschaltungen erfolgen. Eine Möglichkeit ist im eingangs angegebenen Stand der Technik dargestellt. Die Signalfolgen U47 und U48 steuern abwechselnd die Schaltendstufen 49, 50 und geben, z.B. bei einer Zündanlage, die Schließzeiten des elektrischen Schalters im Primärstromkreis einer Zündspule vor, wobei durch das Signalende jeweils die Zündung ausgelöst wird. Der bisher in seiner Wirkung beschriebene Schaltungsteil von Fig. 7 zur Steuerung der Zündvorgänge ist aus dem eingangs angegebenen Stand der Technik bekannt.

Im Zwischenspeicher 109 werden im Takt der an seinem Steuereingang anliegenden Signalfolge U110 die jeweils über den Datenbus anliegenden Zahlenwerte zwischengespeichert. Diese Zahlenwerte können in Abhängigkeit von Paramtern variieren, sind jedoch in Fig. 8 (stationärer Betrieb) als Zahlenwert Z3 dargestellt. Erreicht der sich verändernde Zahlenwert im Zähler 61 den Zahlenwert Z3, so wird am Ausgang des Komparators 108 ein kurzes Ausgangssignal U108 erzeugt. Diese Signale 108 werden einmal über das Flipflop 125 und die Rückmelde-Torstufe 122 dem Mikroprozessor rückgemeldet und erzeugen zudem über das ODER-Gatter 124 ein Interrupt-Signal. Durch ein solches Signal wird das jeweils laufende Programm unterbrochen. Interrupt-Signale sind bei Mikroprozessor-Steuerungen üblich und ihre Wirkung aus dem eingangs angegebenen Stand der Technik bekannt. Weiterhin wird durch die Signalfolge U108 das Flipflop 124 jeweils umgeschaltet, so daß an dessen Ausgang die Signalfolge U124 erzeugt wird. Durch ein solches Signal 124 beginnt nach dem Rücksetzen ein Aufwärtszählvorgang im Zähler 74 mit der luftmengenproportionalen Frequenz an der Klemme 44. Der am Ende der Torzeit erreichte Zählerstand im Zähler 74 ist proportional dem Wert Q̇/n, wobei Q̇ die angesaugte Luftmenge pro Zeiteinheit und n die Drehzahl ist. Über die Torstufe 76 kann der erreichte Zahlenwert bis zu Beginn eines neuen Signals U124 vom Mikroprozessor abgefragt werden. Dieser übernommene Zahlenwert wird im Mikroprozessor gegebenenfalls in Abhängigkeit von Parametern wie der Temperatur, des Luftdrucks usw., korrigiert und auf ein Signal an der Klemme 66 hin zyklisch in den Zwischenspeicher 65 übernommen.

Durch ein Signal U69 werden einmal die beiden Flipflops 120, 121 gesetzt und weiterhin über das ODER-Gatter 118 und den Setzeingang PE der im Zwischenspeicher 65 gespeicherte Zahlenwert in den Zähler 67 übernommen. Der als Rückwärtszähler ausgebildete Zähler 67 beginnt im Takt der an der Klemme 85 anliegenden festen oder wählbaren Frequenz abwärts zu zählen, bis ein Überlaufsignal U67 am Überlaufausgang CO erzeugt wird. Dieses Überlaufsignal wird einmal über die Stufe 122 rückgemeldet und erzeugt darüber hinaus ein Interrupt-Signal an der Klemme 21. Weiterhin wird über das ODER-Gatter 118 der Zähler 67 erneut gesetzt. Dieser Vorgang setzt sich zyklisch solange fort, bis über die Dekodierstufe 126 das Flipflop 121 rückgesetzt wird. Dieses Rücksetzsignal wird in Abhängigkeit des Programms im Mikroprozessor aufgrund der eingehenden Interrupt-Signale festgelegt. Infolge des rückgesetzten Flipflops 121 führt das darauffolgende Überlaufsignal des Zählers 67 über das UND-Gatter 119 zum Rücksetzen des Flipflops 120. Das während des gesetzten Flipflops 120 erzeugte Signal U53 an der Klemme 53 gibt die Einspritzzeit vor und steuert entsprechend den Einspritzvorgang über die Endstufe 54. Die Verwendung mehrerer Zählvorgänge zur Ermittlung eines Einspritzsignals im Zähler 67 erlaubt einfache Multiplikationen von Binärzahlen, die im Mikroprozessor relativ aufwendig zu realisieren wären. Natürlich kann das Signalende eines Signals U53 auch direkt durch ein Signal U126 herbeigeführt werden, indem dieses Signal direkt dem Rücksetzeingang des Flipflops 120 zugeführt wird.

Die an den Eingängen a bis k Rückmelde-Torstufe 122 anliegenden Zustandsmeldungen, die zum Teil in Flipflops gespeichert vorliegen, können durch den Mikroprozessor auf ein Signal an der Klemme 123 hin abgefragt und zur Korrektur der verschiedenen Zahlenwerte herangezogen werden.

Nicht für die Erfindung wesentliche Teile der Eingabe/Ausgabe-Einheit 13 wurden zur Vereinfachung der Darstellung weggelassen, obwohl sie natürlich für das Funktionieren Des Gesamtsystems notwendig sind. Dies sind insbesondere die Erfassung der übrigen Parameter der Brennkraftmaschine, sowie deren Aufarbeitung. In eingangs angegebenen Stand der Technik ist dies jedoch näher beschrieben.

Im folgenden sollen in tabellarischer Form im Handel erhältliche Bauteile aufgeführt werden, die z.B. in den angegebenen Schaltungen Verwendung finden können. Die angegebenen Bauteile stammen sämtliche von der Firma RCA (mit einer Ausnahme) und sind mit ihrer Nummer bezeichnet:

| | |
|---|---|
| Mikroprozessor 10 | CDP 1802 D oder CDP 1802 CD |
| Arbeitsspeicher 11 | CDP 1824 |
| Festwertspeicher 12 | CDP 1833 CD |
| Zähler 61, 67, 74 | CD 4029 |
| Zwischenspeicher 65 | CD 4042 |
| Komparator 105, 108 | MC 14 585 (Motorola) |
| Torstufe 62, 76 | CD 4016 |
| Dekodierstufen 71, 79 | CD 4556 |
| Umschaltvorrichtung 78 | CD 4016 oder CD 4052 |
| Frequenzuntersetzerstufe 77 | CD 4040 |

**Patentansprüche**

1. Einrichtung zum Steuern der Zünd- und/oder Kraftstoffeinspritzvorgänge bei Brennkraftmaschinen, mit einem Mikrorechner-System bestehend aus einem Mikroprozessor, der über einen Datenbus und über einen Adressenbus mit je wenigstens einem Festwertspeicher (ROM, PROM, EPROM), einem Arbeitsspeicher (RAM) sowie einer Eingabe/Ausgabe-Einheit verbunden ist, an die externe Signalgeber zur Erzeugung von betriebsparameterabhängigen Signalen angeschlossen sind, dadurch gekennzeichnet, daß in der Eingabe/Ausgabe-Einheit (13) eine erste mit einem Drehzahlgeber (37) in Verbindung stehende Zählvorrichtung (61) zur Ermittlung drehzahlabhängiger Zahlenwerte sowie zwei weitere Zählvorrichtungen (67, 74) vorgesehen sind, daß der zweiten Zählvorrichtung (67) von -diesen drehzahlabhängigen Zahlenwerten abgeleitete Zahlenwerte zugeführt und mit einer Zählfrequenz ausgezählt werden, daß während dieses Auszählvorgangs in der dritten Zählvorrichtung (74) eine der im Saugrohr des Brennkraftmaschine angesaugten Luftmenge proportionale Zählfrequenz gezählt und das Zählergebnis anschließend in den Datenbus (14) eingelesen wird, und daß ein von diesem Zählergebnis abgeleiteter Zahlenwert durch eine Zählfrequenz ausgezählt wird, wobei die Einspritzdauer und/oder die Schließzeit für einen elektrischen Schalter im Primärstromkreis einer Zündspule durch wenigstens einen Teil dieser Auszähldauer festlegbar ist.

2. Einrichtung nach Anspruch 1, dadurch gekennzeichnet, daß die Auszählung des von der angesaugten Luftmenge abhängigen Zahlenwerts ebenfalls in der zweiten Zählvorrichtung (67) erfolgt.

3. Einrichtung nach Anspruch 1 oder 2, dadurch gekennzeichnet, daß der vom drehzahlabhängigen Zahlenwert abgeleitete Zahlenwert im wesentlichen umgekehrt proportional zur Drehzahl n ist.

4. Einrichtung zum Steuern der Zünd- und/oder Kraftstoffeinspritzvorgänge bei Brennkraftmaschinen, mit einem Mikrorechner-System bestehend aus einem Mikroprozessor, der über einen Datenbus und über einen Adressenbus mit je wenigstens einem Festwertspeicher (ROM, PROM, EPROM), einem Arbeitsspeicher (RAM) sowie einer Eingabe/Ausgabe-Einheit verbunden ist, an die externe Signalgeber zur Erzeugung von betriebsparameterabhängigen Signalen angeschlossen sind, dadurch gekennzeichnet, daß in der Eingabe/Ausgabe-Einheit (13) eine erste mit einem Drehzahlgeber (37) in Verbindung stehende Zählvorrichtung (61) vorgesehen ist, deren periodisch sich verändernder Zahleninhalt zur Bildung eines Drehwinkelsignals mit einem vorgebbaren Zahlenwert verglichen wird, daß während eines solchen Drehwinkelsignals in einer weiteren Zählvorrichtung (74) in der Eingabe/Ausgabe-Einheit (13) eine der im Saugrohr der Brennkraftmaschine angesaugten Luftmenge proportionale Zählfrequenz gezählt und das Zählergebnis anschließend in den Datenbus (14) eingelesen wird, und daß ein von diesem Zählergebnis abgeleiteter Zahlenwert durch eine Zählfrequenz ausgezählt wird, wobei die Einspritzdauer und/oder die Schließzeit für einen elektrischen Schalter im Primärstromkreis einer Zündspule durch wenigstens einen Teil dieser Auszähldauer festlegbar ist.

5. Einrichtung nach Anspruch 4, dadurch gekennzeichnet, daß zur Bildung des Drehwinkelsignals ein Komparator (108) vorgesehen ist, der bei Gleichheit des Zahleninhalts der ersten Zählvorrichtung (61) und des vorgebbaren Zahlenwerts jeweils ein Ausgangssignal abgibt, durch das eine Schalteinrichtung (124) umschaltbar ist.

6. Einrichtung nach Anspruch 4 oder 5, dadurch gekennzeichnet, daß der ersten Zähler (61) eine zweite Vergleichseinrichtung (105) zum Vergleich seines Zahleninhalts mit wenigstens einem vorgebbaren Zahlenwert zugeordnet ist, wobei die erste Vergleichseinrichtung (108) zur Steuerung der Kraftstoffeinspritzvorgänge und die zweite Vergleichseinrichtung (105) zur Steuerung der Zündvorgänge eingesetzt ist.

7. Einrichtung nach Anspruch 5 oder 6, dadurch gekennzeichnet, daß die erste Vergleichseinrichtung (108) zusätzlich zur Erfassung und/oder Steuerung weiterer Vorgänge eingesetzt ist, wobei eine Umschaltvorrichtung zur Umschaltung der der dritten Zählvorrichtung (74) zugeführten luftmengenproportionalen Zählfrequenz auf andere feste oder diesen Vorgängen proportionale Zählfrequenzen vorgesehen ist.

8. Einrichtung nach einem der vorhergehenden Ansprüche, dadurch gekennzeichnet, daß die Einspritzdauer und/oder die Schließzeit für die Zündung durch mehrere Auszahlzyklen der auszählenden Zähleinrichtung (67) festgelegt wird.

9. Einrichtung nach Anspruch 8, dadurch gekennzeichnet, daß nach jedem Auszählzyklus ein Signal zur Programmunterbrechung (Interrupt) dem Mikroprozessor zugeführt wird, daß dieser ein intern errechnetes Signal zur Beendigung der Zyklen einer Torstufe (121, 119) zuführt, über die das Überlaufsignal am Ende des darauffolgenden Zählzyklus als Abschaltsignal wirksam wird.

10. Einrichtung nach einem der vorhergehenden Ansprüche, dadurch gekennzeichnet, daß zur Erhöhung der Genauigkeit eine Drehzahlerkennung (61, 64, 81) vorgesehen ist, durch die oberhalb einer festlegbaren Drehzahl eine um einen bestimmten Faktor längere Zählzeit für die Auszählung der der Luftmenge proportionalen Zählfrequenz vorgebbar ist und daß dieser Faktor nach Korrekturrechenvorgängen in Abhängigkeit weiterer Parameter der Brennkraftmaschine wieder berücksichtigt wird.

11. Einrichtung nach Anspruch 10, dadurch gekennzeichnet, daß zur Festlegung der beiden um den bestimmten Faktor unterschiedlichen Zählzeiten die Zählfrequenz für die Auszählung des von der Drehzahl abhängigen Zahlenwerts um einen bestimmten Faktor veränderbar ist.

12. Einrichtung nach Anspruch 10 oder 11, dadurch gekennzeichnet, daß zur Berücksichtigung des bestimmten Faktors eine entsprechende Division, bzw. Multiplikation des korrigierten, von der Luftmenge abhängigen Zahlenwerts durchgeführt wird.

13. Einrichtung nach Anspruch 10 oder 11, dadurch gekennzeichnet, daß zur Berücksichtigung des bestimmten Faktors die Auszählung des korrigierten, von der Luftmenge abhängigen Zahlenwerts mit einer um diesen Faktor veränderten Frequenz erfolgt.

14. Einrichtung nach einem der Ansprüche 10 bis 13, dadurch gekennzeichnet, daß der bestimmte Faktor eine Zweierpotenz, insbesondere vier, ist.

## Claims

1. Apparatus for controlling the ignition and/or fuel injection operations in combustion engines, comprising a micro-computer system consisting of a micro-processor which is connected by a data bus and by an address bus to at least a respective fixed value store (ROM, PROM, EPROM), a working store (RAM) and a read-in/read-out unit, to which are connected external signal generators for generating signals in accordance with operational parameters, characterised in that, a first counting device (61) for determining speed dependent numerical values in association with a speed sensor (37) and two further counting devices (67, 74) are provided in the read-in/read-out unit (13), that numerical values derived from the said speed-dependent numerical values are transmitted to the second counting device (67) and are counted out at a counting frequency, that, during this counting-out operation in the third counting device (74), a counting frequency proportional to the quantity of air induced in the inlet manifold of the combustion engine is counted and the result of count is then read into the data bus (14) and that a numerical value derived from the said result of count is counted out by a counting frequency, wherein the injection period and/or the closing time for an electrical switch in the primary circuit of an ignition coil can be established by at least a portion of the said counting-out period.

9

2. Apparatus according to claim 1, characterised in that, the counting out of the numerical value dependent on the induced quantity of air likewise takes place in the second counting device (67).

3. Apparatus according to claim 1 or 2, characterised in that, the numerical value derived from the speed dependent numerical value is substantially inversely proportional to the speed n.

4. Apparatus for controlling the ignition and/or fuel injection operations in combustion engines, comprising a micro-computer system consisting of a micro-processor which is connected by a data bus and by an address bus to at least a respective fixed value store (ROM, PROM, EPROM), a working store (RAM) and a read-in/read-out unit, to which are connected external signal generators for generating signals in accordance with operational parameters, characterised in that, a first counting device (61) in association with a speed sensor (37) is provided, the periodically varying numerical content of which is compared with a predeterminable numerical value for forming an angle of rotation signal, that, during such an angle of rotation signal, a counting frequency proportional to the quantity of air induced in the inlet manifold of the combustion engine is counted in a further counting device (74) in the read-in/read-out unit (13) and the result of count is then read-in to the data bus (14), and that a numerical value derived from the said result of count is counted out by a counting frequency wherein the injection period and/or the closing time for an electrical switch in the primary circuit of an ignition coil can be established by at least a portion of the said counting out period.

5. Apparatus according to claim 4, characterised in that, a comparator (108) is provided for forming the angle of rotation signal and which, when the numerical content of the first counting device (61) and of the predeterminable numerical value are equal, delivers a respective output signal by means of which the switching device (124) can be switched over.

6. Apparatus according to claim 4 or 5, characterised in that, a second comparison device (105) for comparing its numerical content with at least one predeterminable numerical value is associated with the first counter (61) wherein the first comparison device (108) is used for controlling the fuel injection operations and the second comparison device (105) is used for controlling the ignition operations.

7. Apparatus according to claim 5 or 6, characterised in that, the first comparison device (108) is used in addition for detecting and/or controlling further operations, wherein a switching device is provided for switching over the counting frequency proportional to the quantity of air transmitted to the third counting device (74) to other counting frequencies fixed or proportional to the said operations.

8. Apparatus according to one of the preceding claims, characterised in that, the injection period and/or the closing time for the ignition is established by a plurality of counted out cycles from the counting out counting device (67).

9. Apparatus according to claim 8, characterised in that, after each counting out cycle, a signal for programme interruption (Interrupt) is transmitted to the micro-processor, that an internally calculated signal for terminating the cycling of a gating stage (121, 119) is transmitted to the micro-processor, by which the overrun signal becomes effective as a switching off signal at the end of the next successive counting cycle.

10. Apparatus according to one of the preceding claims, characterised in that, for increasing the accuracy, a speed recognition (61, 64, 81) is provided through which, above an establishable speed, a counting time longer by a predetermined factor for the counting out of the counting frequency proportional to the quantity of air can be provided and that the said factor is taken into consideration once again after correction calculating operations in accordance with further parameters of the combustion engine.

11. Apparatus according to claim 10, characterised in that, the counting frequency for the counting out of the numerical value dependent on the speed is adjustable by a predetermined factor to establish the two counting times differing by the predetermined factor.

12. Apparatus according to claim 10 or 11, characterised in that, a corresponding division or multiplication of the corrected numerical value dependent on the quantity of air is carried out to take the predetermined factor into consideration.

13. Apparatus according to claim 10 or 11, characterised in that, to take the predetermined factor into consideration, the counting out of the corrected numerical value dependent on the quantity of air takes place at a frequency which is varied by the said factor.

14. Apparatus according to one of claims 10 to 13, characterised in that, the predetermined factor is a power of two, especially four.

**Revendications**

1. Installation pour commander les processus d'allumage et/ou d'injection de carburant dans des moteurs à combustion interne, avec un système micro-calculateur constitué par un microprocesseur respectivement relié par une barre de données et une barre d'adresses à au moins une mémoire de constantes (ROM, PROM, EPROM), à une mémoire de travail (RAM) ainsi qu'à une unité d'entrée/sortie à laquelle sont raccordés des capteurs de signaux extérieurs pour produire des signaux fonction des paramètres de fonctionnement, caractérisée en ce qu'il est prévu dans l'unité d'entrée/sortie (13) un premier dispositif de comptage (61) en liaison avec un capteur de vitesse de rotation (37) pour

**0 007 984**

déterminer des valeurs numériques fonction de la vitesse de rotation ainsi que deux autres dispositifs de comptage (67, 74), en ce que des valeurs numériques dérivées de ces valeurs numériques fonction de la vitesse de rotation sont envoyées au second dispositif de comptage (67) et comptées avec une fréquence de comptage, en ce que pendant cette opération de comptage, une fréquence de comptage proportionnelle à la quantité d'air aspirée dans la tubulure d'admission du moteur à combustion interne est comptée dans le troisième dispositif de comptage et le résultat de comptage est ensuite introduit dans la barre de données (14), et en ce qu'une valeur numérique dérivée de ce résultat de comptage est comptée par une fréquence de comptage, la durée d'injection et/ou le temps de fermeture d'un interrupteur électrique du circuit électrique primaire d'une bobine d'allumage pouvant être déterminés par au moins une partie de cette durée de comptage.

2. Installation selon revendication 1, caractérisée en ce que le compte de la valeur numérique fonction de la quantité d'air aspirée est effectué également dans le second dispositif de comptage (67).

3. Installation selon revendication 1 ou 2, caractérisée en ce que la valeur numérique dérivée de la valeur numérique fonction de la vitesse de rotation est essentiellement inversement proportionnelle à la vitesse de rotation n.

4. Installation pour commander des processus d'allumage et/ou d'injection de carburant dans des moteurs à combustion interne, avec un système micro-calculateur, constitué par un microprocesseur respectivement relié par une barre de données et une barre d'adresses à au moins une mémoire de constantes (ROM, PROM, EPROM), à une mémoire de travail (RAM) ainsi qu'à une unité d'entrée/sortie à laquelle sont raccordés des capteurs de signaux extérieurs pour produire des signaux fonction des paramètres de fonctionnement, caractérisée en ce qu'il est prévu dans l'unité d'entrée/sortie (13) un premier dispositif de comptage (61) en liaison avec un capteur de vitesse de rotation (37) dont le contenu numérique variant périodiquement est comparé pour former un signal d'angle de rotation avec une valeur numérique prédéterminée, en ce que pendant un tel signal d'angle de rotation, dans un autre dispositif de comptage (74) de l'unitée d'entrée/sortie (13), on compte une fréquence de comptage proportionnelle à la quantité d'air aspiré dans la tubulure d'admission du moteur à combustion interne et le résultat de comptage est ensuite introduit dans la base de données (14), et en ce qu'une valeur numérique dérivée de ce résultat de comptage est comptée par une fréquence de comptage, la durée d'injection et/ou le temps de fermeture d'un interrupteur électrique du circuit électrique primaire d'une bobine d'allumage pouvant être déterminés par au moins une partie de cette durée de comptage.

5. Installation selon revendication 4, caractérisée en ce qu'un comparateur (108) est prévu pour former le signal d'angle de rotation, ce comparateur fournissant chaque fois un signal de sortie lors de l'égalité du contenu numérique du premier dispositif de comptage (61) et de la valeur numérique prédéterminée, un dispositif de commutation (124) pouvant être commuté par ce signal de sortie.

6. Installation selon revendication 4 ou 5, caractérisée en ce qu'au premier compteur (61) est associé un second dispositif comparateur (105) pour comparer son contenu numérique avec au moins une valeur numérique prédéterminée, la premier dispositif comparateur (108) étant appliqué pour commander les processus d'injection de carburant et le second dispositif comparateur (105) pour commander les processus d'allumage.

7. Installation selon revendication 5 ou 6, caractérisée en ce que le premier dispositif comparateur (108) est appliqué de plus pour déterminer et/ou commander d'autres processus, un dispositif de commutation étant prévu pour commuter la fréquence de comptage proportionnelle à la quantité d'air envoyée au troisième dispositif de comptage (74) sur d'autres fréquences de comptage fixes ou proportionnelles à ces processus.

8. Installation selon l'une des revendications précédentes, caractérisée en ce que la durée d'injection et/ou le temps de fermeture pour l'allumage sont déterminés par plusieurs cycles de comptage du dispositif de comptage en cours de comptage.

9. Installation selon la revendication 8, caractérisée en ce qu'après chaque cycle de comptage, un signal pour la coupure du programme (interruption) est envoyé au microprocesseur, en ce que celui-ci envoie un signal calculé de façon interne pour l'achèvement des cycles à un étage porte (121, 119), par l'intermédiaire duquel le signal de dépassement à la fin du cycle de comptage suivant agit en tant que signal de coupure.

10. Installation selon l'une des revendications précédentes, caractérisée en ce que pour élever la précision, il est prévu une détection de vitesse de rotation (61, 64, 81), par laquelle au dessus d'une vitesse de rotation pouvant être fixée, on peut prédéterminer un temps de comptage plus long suivant un facteur prédéterminé pour le comptage de la fréquence de comptage proportionnelle à la quantité d'air et en ce que ce facteur est pris en compte après des opérations de calcul de correction en fonction d'autres paramètres du moteur à combustion interne.

11. Installation selon revendication 10, caractérisée en ce que pour fixer les deux temps de comptage différents suivant le facteur déterminé, la fréquence de comptage pour le comptage de la valeur numérique fonction de la vitesse de rotation peut varier d'un facteur déterminé.

12. Installation selon revendication 10 ou 11, caractérisée en ce que pour tenir compte du facteur déterminé, on effectue une division appropriée ou une multiplication de la valeur numérique corrigée fonction de la quantité d'air.

13. Installation selon revendication 10 ou 11, caractérisée en ce que pour tenir compte du facteur

11

déterminé, le comptage de la valeur numérique corigée fonction de la quantité d'air a lieu avec une fréquence modifiée suivant ce facteur.

14. Installation selon l'une des revendications 10 à 13, caractérisée en ce que le facteur déterminé est une puissance de deux, notamment quatre.

FIG.1

0 007 984

Fig. 2

0007 984

# Fig. 3

# Fig. 4

**0 007 984**

Fig. 5

Fig. 6

FIG. 7

0 007 984

**0 007 984**

# FIG.8